(19) Europäisches Patentamt

European Patent Office

Office européen des brevets

(11) **EP 1 416 737 B1**

(12) **FASCICULE DE BREVET EUROPEEN**

(45) Date de publication et mention
de la délivrance du brevet:
**31.08.2005 Bulletin 2005/35**

(51) Int Cl.⁷: **H04N 7/26**, G06T 1/00

(21) Numéro de dépôt: **03292719.6**

(22) Date de dépôt: **30.10.2003**

(54) **Procédé de tatouage d'un signal vidéo, système et support de données pour la mise en oeuvre de ce procédé, procédé et système d'extraction de ce tatouage**

Verfahren, System und Datenträger zur Erzeugung von Videowasserzeichen, Verfahren und System zur Extraktion von diesen Wasserzeichen

Method, system and data support for video watermarking, method and system for extracting this watermaking

(84) Etats contractants désignés:
**DE ES GB IT**

(30) Priorité: **31.10.2002 FR 0213660**

(43) Date de publication de la demande:
**06.05.2004 Bulletin 2004/19**

(73) Titulaire: **FRANCE TELECOM**
**75015 Paris (FR)**

(72) Inventeurs:
• **Bodo, Yann**
**35700 Rennes (FR)**

• **Laurent, Nathalie**
**35630 Vignoc (FR)**

(74) Mandataire:
**de la Bigne, Guillaume Michel Marie et al**
**Lhermet La Bigne & Rémy**
**11, boulevard de Sébastopol**
**75001 Paris (FR)**

(56) Documents cités:
**US-A- 5 960 081**

• **JUN ZHANG ET AL: "Embedding watermark in mpeg video sequence" , 3 octobre 2001 (2001-10-03), pages 535-540, XP010565828**

## Description

La présente invention concerne un procédé de tatouage d'un signal vidéo, un système correspondant et un support de données lisible par ordinateur pour le stockage d'un signal tatoué par ce procédé. Elle concerne également un procédé d'extraction du tatouage d'un signal vidéo et un système pour la mise en oeuvre de ce procédé.

Plus précisément, l'invention concerne un procédé de tatouage par l'application d'une fonction de tatouage à des vecteurs mouvement calculés par estimation de mouvement entre images du signal vidéo, du type comportant les étapes suivantes :

- application de la fonction de tatouage à au moins une partie des vecteurs mouvement calculés ;
- génération du signal vidéo tatoué par compensation de mouvement à l'aide des vecteurs mouvement tatoués,

l'application de la fonction de tatouage étant réalisée à l'aide d'une clé de marquage binaire dont chacun des bits est associé à au moins un vecteur mouvement sélectionné

Un tel procédé est décrit dans le document de F. Jordan, M. Kutter, T. Ebrahimi, "Proposal of a watermarking technique for hiding/retrieving data in compressed and decompressed video", ISO/IEC document JTC1/SC29/WG11/MPEG97/M2281, de juillet 1997. Dans ce document, on applique la fonction de tatouage à l'aide d'une clé de marquage. Celle-ci est un mot binaire d'une longueur de 16 ou 32 bits, inséré dans les vecteurs mouvement du signal vidéo, ceux-ci étant obtenus à l'aide d'un codeur de type MPEG4. On sélectionne autant de vecteurs mouvement qu'il y a de bits dans la clé de marquage, c'est-à-dire 16 ou 32. Puis pour chacun des vecteurs sélectionnés, on insère le bit correspondant de la clé de marquage dans l'une des composantes du vecteur mouvement, par exemple la composante verticale, en modifiant sa parité.

Malheureusement, cette solution n'est pas très robuste, puisque la moindre attaque peut transformer une ordonnée paire en ordonnée impaire et inversement. Par "attaque" on entend des attaques malveillantes mais également des attaques non malveillantes comme la compression, ou le changement de format spatial ou temporel du signal vidéo. De plus, en modifiant toujours la même composante prédéterminée des vecteurs mouvement sélectionnés, par exemple la composante verticale, cette solution risque d'accroître la visibilité du tatouage dans le signal vidéo.

L'invention vise à remédier à ces inconvénients en fournissant un procédé robuste de tatouage d'un signal vidéo, améliorant les performances du tatouage en terme d'invisibilité, tout en faisant porter le tatouage par les vecteurs mouvement.

A cet effet, l'invention a pour objet un procédé de tatouage d'un signal vidéo du type précité, caractérisé en ce que pour l'application de la fonction de tatouage :

- on repère les coordonnées du vecteur mouvement sélectionné dans un espace comportant une partition de référence, certaines parties de cet espace constituant une première zone, et les autres parties de cet espace constituant une seconde zone complémentaire de la première l'une quelconque des deux zones étant située à l'intérieur de l'autre,
- on affecte une valeur binaire à chacune des deux zones ;
- on modifie éventuellement les coordonnées du vecteur mouvement sélectionné, de sorte qu'il se situe dans la zone de la partie à laquelle il appartient, dont la valeur binaire correspond au bit de la clé de marquage auquel est associé le vecteur mouvement sélectionné.

Cette approche permet effectivement d'envisager une plus grande diversité dans la modification des vecteurs mouvement sélectionnés, ce qui améliore la qualité du tatouage en terme d'invisibilité. La robustesse est également améliorée parce que le tatouage conduit à modifier les composantes des vecteurs mouvement sélectionnés par une transformation géométrique et pas seulement par un changement de parité.

Un procédé selon l'invention peut en outre comporter la caractéristique selon laquelle la partition de référence est une grille de référence comportant des blocs de dimensions prédéfinies, chaque bloc comportant une première et une seconde zone.

De façon optionnelle un procédé de tatouage selon l'invention comporte les étapes suivantes :

- calcul hiérarchique de plusieurs niveaux successifs de vecteurs mouvement, les vecteurs mouvement d'un niveau donné étant chacun associés à plusieurs vecteurs mouvement du niveau directement inférieur ;
- sélection d'au moins une partie des vecteurs mouvement appartenant au niveau le plus élevé ;
- application de la fonction de tatouage à chaque vecteur mouvement sélectionné conduisant au calcul d'un paramètre de modification de ce vecteur mouvement ;
- application du paramètre de modification du vecteur mouvement sélectionné aux vecteurs mouvement d'un niveau inférieur associés à ce vecteur mouvement.

L'approche hiérarchique de ce procédé permet effectivement d'augmenter la robustesse du tatouage en étalant judicieusement la clé de marquage sur plusieurs vecteurs mouvement, à partir d'un seul vecteur mouvement sélectionné.

Un procédé de tatouage d'un signal vidéo selon l'invention peut en outre comporter l'une ou plusieurs des caractéristiques suivantes :

- les vecteurs mouvement d'un niveau donné sont chacun égaux à la moyenne des vecteurs mouvement du niveau directement inférieur auxquels ils sont associés ;
- il comporte une étape de calcul hiérarchique de deux niveaux successifs de vecteurs mouvement, chaque vecteur mouvement du niveau supérieur étant associé à quatre vecteurs mouvement du niveau inférieur ;
- les première et seconde zones sont de surfaces sensiblement égales ;
- on définit dans chaque bloc de la grille de référence un sous-bloc centré à l'intérieur du bloc, la première zone étant définie par l'intérieur du sous-bloc et la seconde zone étant la zone complémentaire de la première zone dans le bloc ;
- les blocs et sous-blocs de la grille de référence sont rectangulaires ;
- la modification éventuellement apportée au vecteur mouvement sélectionné est une symétrie pondérée ;
- la modification éventuellement apportée au vecteur mouvement sélectionné est soit une symétrie centrale pondérée par rapport à l'un des sommets du sous-bloc, soit une symétrie axiale pondérée par rapport à l'un des côtés du sous-bloc ;
- chaque bit de la clé de marquage binaire est associé à plusieurs vecteurs mouvement sélectionnés ; et
- une partie des bits de la clé de marquage binaire est associée à des vecteurs mouvement calculés par estimation de mouvement entre deux images du signal vidéo, et au moins une autre partie des bits de la clé de marquage binaire est associée à des vecteurs mouvement calculés par estimation de mouvement entre au moins deux autres images du signal vidéo.

L'invention a également pour objet un dispositif de tatouage d'un signal vidéo, caractérisé en ce qu'il comporte des moyens pour la mise en oeuvre d'un procédé tel que décrit précédemment.

L'invention a également pour objet un support de données lisible par un ordinateur, caractérisé en ce qu'il comporte des moyens de stockage d'un signal vidéo tatoué à l'aide d'un procédé tel que décrit précédemment.

L'invention a également pour objet un procédé d'extraction du tatouage d'un signal vidéo tatoué par l'application d'un procédé tel que décrit précédemment, caractérisé en ce qu'il comprend l'application d'une fonction d'extraction de la clé de marquage binaire consistant à :

- sélectionner les vecteurs tatoués ;

- repérer les coordonnées de chaque vecteur mouvement tatoué dans la grille de référence ;
- allouer au bit de la clé de marquage auquel est associé le vecteur mouvement sélectionné, la valeur binaire de la zone dans laquelle se situe le vecteur tatoué.

Un procédé d'extraction du tatouage d'un signal vidéo peut en outre comporter la caractéristique selon laquelle, pour chaque vecteur mouvement du niveau le plus élevé sélectionné lors de l'application du procédé de tatouage :

- on extrait les vecteurs mouvement tatoués associés à ce vecteur mouvement ;
- on calcule un vecteur moyen égal à la moyenne des vecteurs mouvement tatoués associés à ce vecteur mouvement ; et
- on applique la fonction d'extraction de la clé de marquage au vecteur moyen calculé.

Enfin, l'invention a également pour objet un dispositif d'extraction du tatouage d'un signal vidéo, caractérisé en ce qu'il comporte des moyens pour la mise en oeuvre d'un procédé d'extraction de tatouage tel que décrit précédemment.

L'invention sera mieux comprise à la lecture de la description qui va suivre, donnée uniquement à titre d'exemple et faite en se référant aux dessins annexés dans lesquels :

- la figure 1 représente les étapes successives d'un procédé de tatouage selon l'invention ;
- la figure 2 représente une grille de référence utilisée pour l'application d'une fonction de tatouage selon l'invention ;
- les figures 3, 4, 5 et 6 illustrent les règles d'application de la fonction de tatouage.

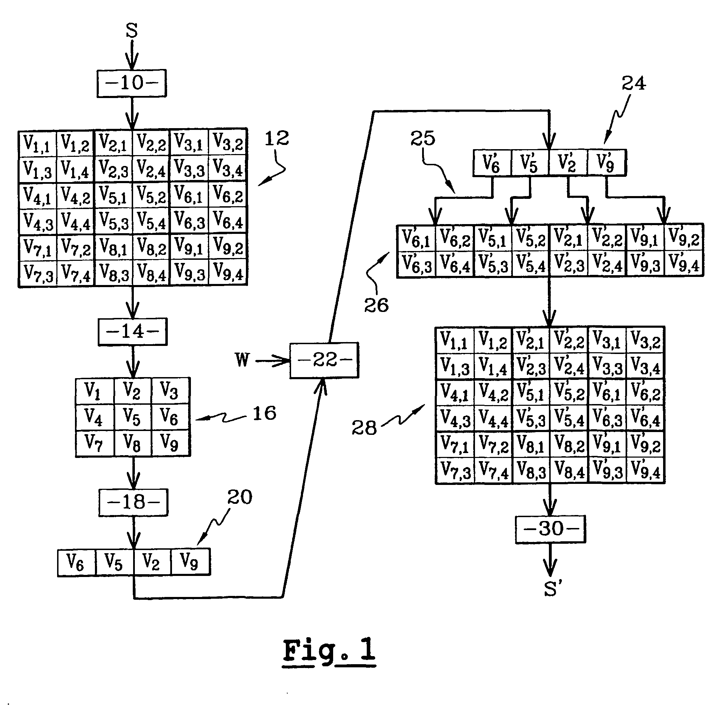

Le procédé de tatouage représenté sur la figure 1 est mis en oeuvre par des moyens informatiques de type classique. Il s'agit, par exemple, d'un micro-ordinateur qui comporte une unité centrale de calcul associée à des mémoires de type RAM et ROM.

Le procédé de tatouage comporte une première étape 10 d'estimation de mouvement.

Lors de cette étape, on fournit en entrée du micro-ordinateur un signal source vidéo S et, de façon classique, on associe à une image quelconque du signal vidéo S une matrice de vecteurs mouvement 12. Cette matrice de vecteurs mouvement permet de générer une image prédite de l'image considérée à partir, par exemple, de l'image précédente du signal vidéo, en déplaçant des blocs de pixels de celle-ci, en fonction des vecteurs mouvement calculés.

Le calcul des vecteurs mouvement s'effectue par exemple par l'application d'un procédé de "block matching". Ce procédé consiste, pour chaque bloc de pixels de l'image considérée, à évaluer le meilleur vecteur mouvement permettant de reconstruire ce bloc courant à partir d'un bloc de même taille de l'image précédente déplacé à l'aide du vecteur mouvement. Pour ce faire, on réalise une recherche autour du bloc courant dans l'image précédente, afin de déterminer le vecteur mouvement qui minimise une fonction de coût classique connue sous le nom de DFD pour "Displaced Frame Difference", représentant la différence entre le bloc de l'image précédente déplacé et le bloc courant dans l'image considérée.

La matrice de vecteurs mouvement 12 représentée sur cette figure comporte trente-six vecteurs mouvement notés $\vec{V}_{i,j}$, avec $1 \le i \le 9$ et $1 \le j \le 4$. Bien entendu le nombre de vecteurs mouvement sera généralement plus élevé. On n'en a représenté que trente-six, par souci de simplicité dans la suite de la description.

Ensuite, lors d'une étape 14, on calcule un niveau plus élevé de vecteurs mouvement 16. Dans ce niveau plus élevé, chaque vecteur mouvement est associé à quatre vecteurs mouvement du niveau inférieur 12. En effet, les blocs correspondant à chaque vecteur mouvement du niveau inférieur 12 sont regroupés par quatre en macro-blocs. Le niveau supérieur compte donc 9 vecteurs notés $\vec{V}_1$ à $\vec{V}_9$. Chaque vecteur mouvement $\vec{V}_i$ du niveau supérieur est représentatif d'un macro-bloc et est calculé de la façon suivante :

$$\vec{V_i} = \frac{1}{4}\sum_{j=1}^{4}\overrightarrow{V_{i,j}}$$

L'étape 14 pourrait être réitérée plusieurs fois, de sorte qu'une hiérarchie de niveaux de vecteurs mouvement pourrait être créée. Dans cette exemple, on se limite à une seule itération, c'est-à-dire à deux niveaux de vecteurs mouvement.

Ensuite, lors d'une étape 18, on sélectionne de façon déterministe, ou de façon pseudo aléatoire à partir d'une clé secrète, ou à partir d'un masque, un ensemble 20 de vecteurs mouvement parmi les vecteurs mouvement 16 du niveau supérieur. Dans cet exemple, l'ensemble 20 de vecteurs mouvement sélectionnés est constitué des vecteurs $\vec{V}_6$, $\vec{V}_5$, $\vec{V}_2$ et $\vec{V}_9$.

Lors de l'étape de tatouage 22 suivante, on modifie les vecteurs sélectionnés 20 par l'application sur ceux-ci d'une fonction de tatouage, à l'aide d'une clé de marquage W. Le nombre de vecteurs mouvement 20 sélectionnés est directement lié à la taille de la clé de marquage W. Dans cet exemple, W est un mot binaire comprenant quatre bits. C'est la raison pour laquelle quatre vecteurs mouvement ont été sélectionnés lors de l'étape 18.

Ainsi, lors de l'étape 22, la fonction de tatouage est paramétrée pour insérer le premier bit de la clé de marquage W dans le vecteur mouvement $\vec{V}_6$, le deuxième bit dans le vecteur mouvement $\vec{V}_5$, le troisième bit dans le vecteur mouvement $\vec{V}_2$ et le quatrième bit dans le vecteur mouvement $\vec{V}_9$.

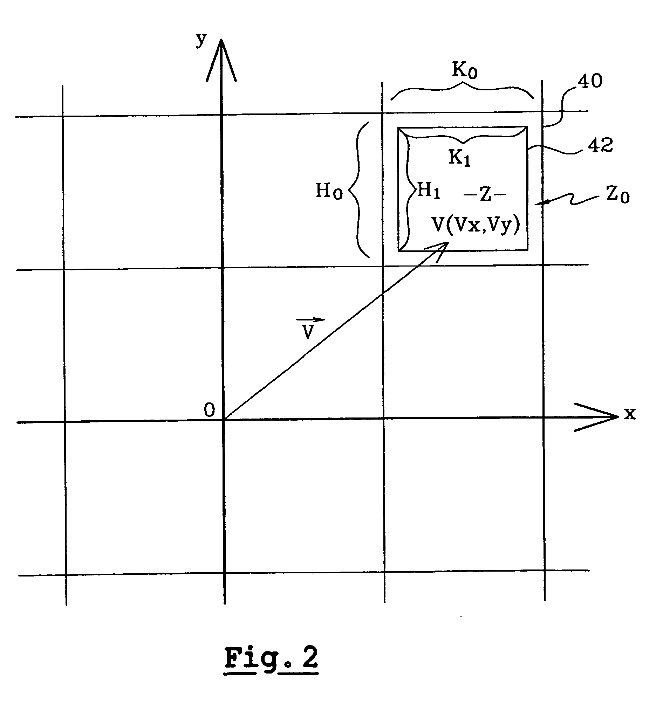

La fonction de tatouage choisie sera décrite plus précisément en référence aux figures 2 à 6. Mais d'une façon générale, elle peut être modélisée par l'équation suivante :

$$f\left(\overrightarrow{V_i}\right) = \overrightarrow{V_i} + \overrightarrow{\delta V_i} \, ,$$

où $\overrightarrow{\delta V_i}$ est un paramètre dépendant de la fonction de tatouage choisie et du i-ème bit à insérer de la clé de marquage W.

Suite à cette étape 22, on obtient quatre nouveaux vecteurs mouvement $\vec{V}'_6$, $\vec{V}'_5$, $\vec{V}'_2$, et $\vec{V}'_9$. Comme indiqué précédemment, Ces vecteurs vérifient les relations suivantes :

$$\vec{V}'_6 = \vec{V}_6 + \overrightarrow{\delta V}_6,$$

$$\vec{V}'_5 = \vec{V}_5 + \overrightarrow{\delta V}_5,$$

$$\vec{V}'_2 = \vec{V}_2 + \overrightarrow{\delta V}_2,',$$

$$\vec{V}'_9 = \vec{V}_9 + \overrightarrow{\delta V}_9,.$$

Lors de l'étape 25 suivante, on applique, aux vecteurs mouvement du niveau inférieur qui sont associés aux vecteurs sélectionnés 20, la fonction de tatouage avec les paramètres $\overrightarrow{\delta V_i}$, calculés lors de l'étape précédente. Ainsi par exemple, la transformation $\overrightarrow{\delta V_6}$ appliquée au vecteur mouvement $\vec{V}_6$, est également appliquée aux vecteurs correspondants du niveau inférieur c'est-à-dire les vecteurs $\overrightarrow{V_{6,1}}$, $\overrightarrow{V_{6,2}}$, $\overrightarrow{V_{6,3}}$, $\overrightarrow{V_{6,4}}$. On obtient ainsi seize nouveaux vecteurs mouvement 26 au niveau inférieur, vérifiant l'équation suivante :

$$\forall i \in \{6;5;2;9\}, \, \forall j \in \{1,2,3,4\} \, \overrightarrow{V'_{i,j}} = \overrightarrow{V_{i,j}} + \overrightarrow{\delta V_i}$$

Ces seize nouveaux vecteurs mouvement remplacent les vecteurs initiaux correspondants pour fournir une nouvelle matrice 28 de vecteurs mouvement. Cette nouvelle matrice 28 permet d'obtenir une version tatouée S' du signal vidéo S.

En effet, lors d'une dernière étape 30, on procède à une compensation de mouvement à l'aide de cette matrice de vecteurs mouvement 28, à partir de l'image qui a servi de référence à l'estimation de mouvement lors de l'étape 10, c'est-à-dire l'image précédant l'image considérée.

Lors de cette étape, deux méthodes sont envisageables.

Une première méthode consiste à effectuer la compensation de mouvement à l'aide de l'ensemble des vecteurs mouvement de la matrice 28 pour retrouver une version tatouée de l'image considérée.

Une deuxième méthode consiste à n'effectuer la compensation de mouvement que pour les blocs correspondants aux vecteurs mouvement modifiés par l'opération de tatouage et à laisser les autres blocs de l'image considérée inchangés, afin d'obtenir une meilleure qualité d'image.

Les étapes 10 à 30 précédemment décrites peuvent être réitérées sur plusieurs images du signal vidéo S. La redondance ainsi obtenue permet d'augmenter la robustesse du tatouage.

On peut aussi réaliser la redondance du tatouage en associant chaque bit de la clé de marquage W à plusieurs vecteurs mouvement sélectionnés dans le niveau supérieur.

Un procédé de tatouage tel que celui qui est décrit précédemment ne s'inscrit pas dans un système de codage/décodage. Mais les modifications à y apporter pour qu'il puisse être mis en oeuvre dans un tel système, mettant en oeuvre une analyse du mouvement, sont évidentes. En effet, les procédés de codage vidéo, tels que les procédés utilisant le standard MPEG2 ou le standard MPEG4, génèrent des matrices de vecteurs mouvement sur lesquelles il est possible d'appliquer le procédé précédemment décrit, lors du codage du signal vidéo.

On notera que l'étape 14 est optionnelle. Sans l'application de cette étape, les vecteurs mouvement sélectionnés sont les vecteurs mouvement du niveau inférieur, et on peut compenser l'étalement moins important du tatouage dans l'image, par la sélection de plusieurs vecteurs mouvement pour chaque bit de la clé de marquage. Ceci a cependant pour effet de limiter les performances du tatouage en terme d'invisibilité. En effet, un intérêt de l'approche hiérarchique est d'appliquer la même déformation sur des vecteurs mouvement voisins dans le niveau inférieur.

Dans un mode de réalisation particulier de l'invention, on peut répartir l'insertion de la clé de marquage dans le signal vidéo S sur plusieurs couples d'images. Autrement dit, on peut n'insérer qu'une partie de la clé de marquage W dans des vecteurs mouvement sélectionnés d'une matrice de vecteurs mouvement calculée entre deux images successives, puis insérer l'autre partie de la clé de marquage sur une ou plusieurs matrices de vecteurs mouvement calculées entre d'autres couples d'images successives du signal vidéo S

La fonction de tatouage appliquée sur les vecteurs mouvement sélectionnés 20 va maintenant être décrite en référence aux figures 2 à 6.

Pour l'application de la fonction de tatouage, on utilise une grille de référence qui est représentée sur la figure 2. Cette grille est placée dans un repère cartésien (O,x,y) orthogonal et est constituée de blocs 40 de

dimension $K_0$ en abscisses et $H_0$ en ordonnées. Dans notre exemple, $K_0$ est égal à $H_0$ et vaut 7 pixels.

On définit un sous-bloc 42 de plus petites dimensions et centré à l'intérieur de chaque bloc. Dans notre exemple, le sous- bloc 42 a les dimensions suivantes :

$$K_1 = H_1 = 5 \text{ pixels.}$$

On définit ainsi, à l'intérieur de chaque bloc de la grille de référence, deux zones $Z_0$ et $Z_1$, la première zone $Z_0$ étant comprise entre le sous-bloc 42 et le bloc 40, et la zone $Z_1$ étant la zone intérieure au sous-bloc 42. De préférence, les dimensions $K_0$, $H_0$, $K_1$ et $H_1$ sont choisies pour que les zones $Z_0$ et $Z_1$ soient sensiblement de même surface. Dans cet exemple, la surface totale de chaque bloc 40 est de 49 pixels, la surface de la zone $Z_1$ est de 25 pixels et la surface de la zone $Z_0$ est de 24 pixels.

Soit

$$\vec{V}\left(V_x, V_y\right)$$

un vecteur mouvement sélectionné pour l'application de la fonction de tatouage à l'aide de la clé de marquage W. Plus précisément, l'application de la fonction de tatouage sur le vecteur $\vec{V}$ consiste à transformer celui-ci pour qu'il porte une information permettant de déterminer la valeur de l'un des bits de la clé de marquage, par exemple le i-ème bit noté $W_i$. On notera

$$\vec{V'}\left(V'_x, V'_y\right)$$

le vecteur résultant.

La fonction de tatouage est définie par l'application des règles suivantes :

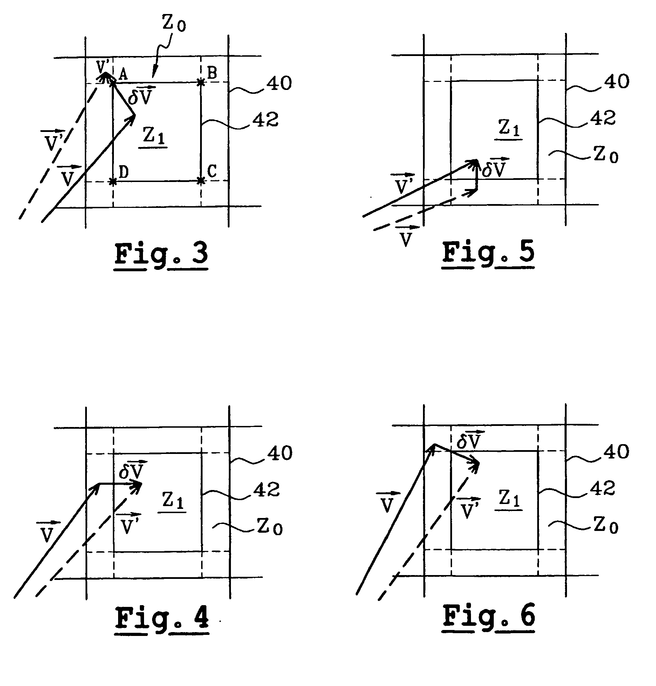

- si $W_i = 0$ et si le point V de coordonnées $(V_x, V_y)$ dans (O, x, y) est situé dans la zone $Z_0$, alors $\vec{V'} = \vec{V}$ ;
- si $W_1 = 0$ et si le point V de coordonnées $(V_x, V_y)$ dans (O, x, y) est situé dans la zone $Z_1$, alors V subit une transformation, de telle sorte que le point V' de coordonnées $(V'_x, V'_y)$ dans (O, x, y) soit situé dans $Z_0$ (Cette transformation sera détaillée en référence à la figure 3) ;
- si $W_i = 1$ et si le point V de coordonnées $(V_x, V_y)$ dans (O, x, y) est situé dans la zone $Z_1$, alors $\vec{V'} = \vec{V}$ ;
- si $W_i = 1$ et si le point V de coordonnées $(V_x, V_y)$ dans (O, x, y) est situé dans la zone $Z_0$, alors $\vec{V}$ subit une transformation, de telle sorte que le point V' de coordonnées $(V'_x, V'_y)$ dans (O, x, y) soit situé dans

$Z_1$. (Cette transformation sera détaillée en référence aux figures 4, 5 et 6).

La figure 3 illustre le cas où $W_i = 0$ et où le point V se situe dans la zone $Z_1$ c'est-à-dire à l'intérieur du sous-bloc 42 dont les sommets sont notés A, B, C et D.

On détermine le sommet le plus proche de V, ici le point A, puis on applique une symétrie centrale pondérée de centre A pour ramener le point V en V' situé dans la zone $Z_0$. Bien entendu le paramètre de pondération est calculé de telle sorte que V' soit toujours dans la zone $Z_0$. Par exemple, compte-tenu des dimensions des blocs 40 et 42, on définit ici la symétrie centrale pondérée par la relation suivante : $\overrightarrow{AV'} = -\frac{2}{5}\overrightarrow{AV}$.

Si $W_i = 1$ et si V est situé dans la zone $Z_0$ on obtient V' en appliquant une symétrie axiale pondérée dont l'axe est le côté du sous-bloc 42 le plus proche du point V, si cette transformation permet d'obtenir un point V' situé dans la zone $Z_1$. C'est le cas illustré par les figures 4 et 5.

Dans ce cas, si l'on note H la projection de V sur l'axe considéré, et avec les dimensions choisies dans notre exemple, la symétrie axiale pondérée est définie par la relation suivante : $\overrightarrow{HV'} = -\frac{5}{2}\overrightarrow{HV}$.

Dans les autres cas représentés sur la figure 6, c'est-à-dire lorsque l'image du point V par une symétrie axiale telle que décrite précédemment ne permet pas d'obtenir de point V' dans la zone $Z_1$, on applique au point V une symétrie centrale pondérée, dont le centre est le sommet A, B, C ou D le plus proche. Dans l'exemple de la figure 6, c'est le point A. La symétrie centrale pondérée est ici définie par la relation $\overrightarrow{AV'} = -\frac{5}{2}\overrightarrow{AV}$. Ce cas se présente lorsque le point V est situé au voisinage de l'un des sommets du bloc 40.

Il est possible de détecter et extraire la marque insérée dans un signal vidéo, selon le procédé de tatouage décrit précédemment.

Le procédé de détection et d'extraction de la marque est un procédé qui comprend l'application d'une fonction d'extraction de la clé de marquage binaire W consistant à :

- sélectionner les vecteurs tatoués ;
- repérer les coordonnées de chaque vecteur mouvement tatoué dans la grille de référence ;
- allouer au bit de la clé de marquage auquel est associé le vecteur mouvement sélectionné, la valeur binaire de la zone dans laquelle se situe le vecteur tatoué.

De façon plus précise, si l'étape 14 a été mise en oeuvre lors du tatouage du signal vidéo, pour chaque vecteur mouvement 20 du niveau le plus élevé 16 sélectionné lors de l'application du procédé de tatouage :

- on extrait les vecteurs mouvement tatoués associés à ce vecteur mouvement ;
- on calcule un vecteur moyen égal à la moyenne des vecteurs mouvement tatoués 26 associés à ce vecteur mouvement ; et
- on applique la fonction d'extraction de la clé de marquage décrite précédemment au vecteur moyen calculé.

Ce procédé d'extraction permet d'extraire une estimation

$$\widetilde{W} = \left(\widetilde{W}_1 , \widetilde{W}_2 , \widetilde{W}_3 , \widetilde{W}_4\right)$$

de la clé de marquage $W=(W_1, W_2, W_3, W_4)$, à partir d'une image tatouée du signal vidéo.

Une fois cette clé de marquage extraite, un score de corrélation permet de déterminer un seuil de confiance caractérisant la présence ou l'absence de la clé de marquage dans le signal vidéo.

Une première règle de corrélation pour estimer cette présence ou non de la clé de marquage dans une image est donnée par la formule suivante :

$$C = \frac{\sum_{i=1}^{4}\left[\left(\widetilde{W}_i - \overline{\widetilde{W}}\right)*\left(W_i - \overline{W}\right)\right]}{\sqrt{\sum_{i=1}^{4}\left[\left(\widetilde{W}_i - \overline{\widetilde{W}}\right)^2\right]*\sum_{i=1}^{4}\left[\left(W_i - \overline{W}\right)^2\right]}}$$

où

$$\overline{\widetilde{W}} = \frac{1}{4}\sum_{i=1}^{4}\widetilde{W}_i , \text{ et } \overline{W} = \frac{1}{4}\sum_{i=1}^{4}W_i .$$

Une deuxième règle de corrélation pour estimer la présence de la clé de marquage dans une pluralité d'images $I'_n$ du signal S' est donnée par la formule récurrente suivante :

$$C_n = \frac{C_{n-1}*(n-1) + \left(1 - \frac{d\left(\widetilde{w}_n, w\right)}{8}\right)}{n},$$

où $d(\widetilde{w}_n, w)$ est la distance de Hamming.

Il apparaît clairement qu'un procédé de tatouage selon l'invention améliore la robustesse et la performance en terme d'invisibilité des procédés existants.

En effet, la fonction de tatouage, qui vise à placer un vecteur mouvement dans une zone $Z_1$ ou $Z_0$ en fonction de la valeur du bit de la clé de marquage à insérer, permet d'effectuer un tatouage très peu visible sur le signal vidéo.

Un autre avantage d'un procédé de tatouage selon l'invention réside dans l'approche hiérarchique décrite précédemment en référence notamment à l'étape 14 du procédé décrit précédemment. l'étalement du tatouage sur plusieurs vecteurs mouvement d'un niveau hiérarchique inférieur à partir de la sélection d'un vecteur mouvement correspondant issu d'un niveau hiérarchique supérieur, permet de réduire l'impact d'une attaque, malveillante ou non, sur le tatouage du signal vidéo.

## Revendications

1. Procédé de tatouage d'un signal vidéo (S) par l'application d'une fonction de tatouage à des vecteurs mouvement calculés par estimation de mouvement entre images du signal vidéo, comportant les étapes suivantes :

   - application (22) de la fonction de tatouage à au moins une partie (20) des vecteurs mouvement calculés ;
   - génération (30) du signal vidéo tatoué par compensation de mouvement à l'aide des vecteurs mouvement tatoués (28),

   l'application de la fonction de tatouage étant réalisée à l'aide d'une clé de marquage binaire (W) dont chacun des bits est associé à au moins un vecteur mouvement sélectionné, **caractérisé en ce que** pour l'application de la fonction de tatouage :

   - on repère les coordonnées du vecteur mouvement sélectionné ($\vec{V}$) dans un espace de référence divisé en plusieurs parties prédéterminées ;
   - on définit, dans chaque partie, deux zones complémentaires Z0 et Z1, l'une quelconque des deux zones étant située à l'intérieur de l'autre.
   - on affecte une valeur binaire à chacune des deux zones ;
   - on modifie éventuellement les coordonnées du vecteur mouvement sélectionné, de sorte qu'il se situe dans la zone de la partie à laquelle il appartient, dont la valeur binaire correspond au bit de la clé de marquage auquel est associé le vecteur mouvement sélectionné.

2. Procédé de tatouage d'un signal vidéo (S) selon la revendication 1, **caractérisé en ce que** la partition de référence est une grille de référence comportant des blocs (40) de dimensions prédéfinies, chaque bloc comportant une première et une seconde zones ($Z_0$, $Z_1$).

3. Procédé de tatouage d'un signal vidéo (S) selon la revendication 1 ou 2, **caractérisé en ce qu'**il comporte les étapes suivantes :

   - calcul hiérarchique (14) de plusieurs niveaux successifs (12, 16) de vecteurs mouvement, les vecteurs mouvement d'un niveau donné étant chacun associés à plusieurs vecteurs mouvement du niveau directement inférieur ;
   - sélection (18) d'au moins une partie des vecteurs mouvement appartenant au niveau le plus élevé (16) ;
   - application (22) de la fonction de tatouage à chaque vecteur mouvement sélectionné conduisant au calcul d'un paramètre de modification de ce vecteur mouvement ;
   - application du paramètre de modification du vecteur mouvement sélectionné aux vecteurs mouvement d'un niveau inférieur associés à ce vecteur mouvement.

4. Procédé de tatouage d'un signal vidéo (S) selon la revendication 3, **caractérisé en ce que** les vecteurs mouvement d'un niveau (16) donné sont chacun égaux à la moyenne des vecteurs mouvement du niveau directement inférieur (12) auxquels ils sont associés.

5. Procédé de tatouage d'un signal vidéo (S) selon la revendication 3 ou 4, **caractérisé en qu'**il comporte une étape de calcul hiérarchique (14) de deux niveaux successifs (12, 16) de vecteurs mouvement, chaque vecteur mouvement du niveau supérieur (16) étant associé à quatre vecteurs mouvement du niveau inférieur (12).

6. Procédé de tatouage d'un signal vidéo selon l'une quelconque des revendications 1 à 5, **caractérisé en ce que** les première et seconde zones ($Z_0$, $Z_1$) sont de surfaces sensiblement égales.

7. Procédé de tatouage d'un signal vidéo (S) selon l'une quelconque des revendications 1 à 6, **caractérisé en ce que** l'on définit dans chaque bloc (40) de la grille de référence un sous-bloc (42) centré à l'intérieur du bloc, la première zone ($Z_1$) étant définie par l'intérieur du sous-bloc et la seconde zone ($Z_2$) étant la zone complémentaire de la première zone dans le bloc.

8. Procédé de tatouage d'un signal vidéo (S) selon la revendication 7, **caractérisé en ce que** les blocs (40) et sous-blocs (42) de la grille de référence sont rectangulaires.

9. Procédé de tatouage d'un signal vidéo (S) selon l'une quelconque des revendications 1 à 8, **caractérisé en ce que** la modification éventuellement apportée au vecteur mouvement sélectionné ($\vec{V}$) est

une symétrie pondérée.

**10.** Procédé de tatouage d'un signal vidéo (S) selon les revendications 8 et 9, **caractérisé en ce que** la modification éventuellement apportée au vecteur mouvement sélectionné ($\vec{V}$) est soit une symétrie centrale pondérée par rapport à l'un des sommets du sous-bloc (42), soit une symétrie axiale pondérée par rapport à l'un des côtés du sous-bloc (42).

**11.** Procédé de tatouage d'un signal vidéo (S) selon l'une quelconque des revendications 1 à 10, **caractérisé en ce que** chaque bit de la clé de marquage binaire (W) est associé à plusieurs vecteurs mouvement sélectionnés.

**12.** Procédé de tatouage d'un signal vidéo (S) selon l'une quelconque des revendications 1 à 11, **caractérisé en ce qu'**une partie des bits de la clé de marquage binaire (W) est associée à des vecteurs mouvement calculés par estimation de mouvement entre deux images du signal vidéo (S), et **en ce qu'**au moins une autre partie des bits de la clé de marquage binaire est associée à des vecteurs mouvement calculés par estimation de mouvement entre au moins deux autres images du signal vidéo.

**13.** Dispositif de tatouage d'un signal vidéo (S), **caractérisé en ce qu'**il comporte des moyens pour la mise en oeuvre d'un procédé selon l'une quelconque des revendications 1 à 12.

**14.** Support de données lisible par un ordinateur, **caractérisé en ce qu'**il stocke un signal vidéo (S') tatoué à l'aide d'un procédé selon l'une quelconque des revendications 1 à 12.

**15.** Procédé d'extraction du tatouage d'un signal vidéo (S') tatoué par l'application d'un procédé selon l'une quelconque des revendications 1 à 12, **caractérisé en ce qu'**il comprend l'application d'une fonction d'extraction de la clé de marquage binaire (W) consistant à :

- sélectionner les vecteurs tatoués ;
- repérer les coordonnées de chaque vecteur mouvement tatoué dans la partition de référence ;
- allouer au bit de la clé de marquage auquel est associé le vecteur mouvement sélectionné, la valeur binaire de la zone dans laquelle se situe le vecteur tatoué.

**16.** Procédé d'extraction du tatouage d'un signal vidéo (S') selon la revendication 15, le signal vidéo (S') étant tatoué par l'application d'un procédé selon la revendication 3, **caractérisé en ce que**, pour chaque vecteur mouvement (20) du niveau le plus élevé (16) sélectionné lors de l'application du procédé de tatouage :

- on extrait les vecteurs mouvement tatoués (26) associés à ce vecteur mouvement ;
- on calcule un vecteur moyen égal à la moyenne des vecteurs mouvement tatoués (26) associés à ce vecteur mouvement ; et
- on applique la fonction d'extraction de la clé de marquage au vecteur moyen calculé.

**17.** Dispositif d'extraction du tatouage d'un signal vidéo (S'), **caractérisé en ce qu'**il comporte des moyens pour la mise en oeuvre d'un procédé selon la revendication 15 ou 16.

## Claims

**1.** A method for watermarking a video signal (S) by applying a watermarking function to movement vectors calculated by estimation of movement between images of the video signal, the method comprising the following steps:

- applying (22) the watermarking function to at least some (20) of the calculated movement vectors; and
- generating (30) the watermarked video signal by compensating movement with the aid of the watermarked movement vectors (28),

the watermarking function being applied with the aid of a binary marking key (W), each bit of which is associated with at least one selected movement vector, which method is **characterized in that**, in order to apply the watermarking function, it further comprises the following steps:

- marking the coordinates of the selected movement vector ($\vec{V}$) in a reference space divided into a plurality of predetermined portions;
- defining two complementary zones $Z_0$ and $Z_1$ in each portion, one of the two zones being situated inside the other one;
- assigning a binary value to each of the two zones; and
- where necessary, modifying the coordinates of the selected movement vector so that it is in the zone of the portion to which it belongs, of binary value which corresponds to the bit of the marking key with which the selected movement vector is associated.

**2.** A method according to claim 1 for watermarking a video signal (S), **characterized in that** the reference partition is a reference grid including blocks (40) with predefined dimensions, each block including a first and a second zones ($Z_0$, $Z_1$).

**3.** A method according to claim 1 or claim 2 for watermarking a video signal (S), **characterized in that** it includes the following steps:

- hierarchically calculating (14) a plurality of successive levels (12, 16) of movement vectors, the movement vectors of a given level each being associated with a plurality of movement vectors of the next lower level;
- selecting (18) at least some of the movement vectors belonging to the highest level (16);
- applying (22) the watermarking function b each selected movement vector, leading to calculating a modification parameter for said movement vector; and
- applying the modification parameter of the selected movement vector to the movement vectors of a lower level associated with said movement vector.

**4.** A method according to claim 3 for watermarking a video signal (S), **characterized in that** the movement vectors of a given level (16) are each equal to the average of the movement vectors of the next lower level (12) with which they are associated.

**5.** A method according to claim 3 or claim 4 for watermarking a video signal (S), **characterized in that** it includes a step of hierarchically calculating (14) two successive levels (12, 16) of movement vectors, each movement vector of the higher level (16) being associated with four movement vectors of the lower level (12).

**6.** A method according to any one of claims 1 to 5 for watermarking a video signal, **characterized in that** the first and second zones ($Z_0$, $Z_1$) have substantially equal areas.

**7.** A method according to any one of claims 1 to 6 for watermarking a video signal (S), **characterized in that** a sub-block (42) centered inside the block is defined in each block (40) of the reference grid, the first zone ($Z_1$) being defined by the interior of the sub-block and the second zone ($Z_2$) being the zone in the block complementary to the first zone.

**8.** A method according to claim 7 for watermarking a video signal (S), **characterized in that** the blocks (40) and sub-blocks (42) of the reference grid are rectangular.

**9.** A method according to any one of claims 1 to 8 for watermarking a video signal (S), **characterized in that** the modification, if any, applied to the selected movement vector ($\dot{V}$) is a weighted symmetry.

**10.** A method according to claim 8 and claim 9 for watermarking a video signal (S), **characterized in that** the modification, if any, applied to the selected movement vector ($\dot{V}$) is either a weighted central symmetry relative to one of the vertices of the sub-block (42) or a weighted axial symmetry relative to one of the sides of the sub-block (42).

**11.** A method according to any one of claims 1 to 10 for watermarking a video signal (S), **characterized in that** each bit of the binary marking key (W) is associated with a plurality of selected movement vectors.

**12.** A method according to any one of claims 1 to 11 for watermarking a video signal (S), **characterized in that** some of the bits of the binary marking key (W) are associated with movement vectors calculated by estimating movement between two images of the video signal (S), and **in that** at least one other portion of the bits of the binary marking key is associated with movement vectors calculated by estimating movement between at least two other images of the video signal.

**13.** A device for watermarking a video signal (S), which device is **characterized in that** it includes means for implementing a method according to any one of claims 1 to 12.

**14.** A computer readable data medium, **characterized in that** it stores a video signal (S') watermarked with the aid of a method according to any one of claims 1 to 12.

**15.** A method of extracting watermarking from a video signal (S') watermarked by applying a method according to any one of claims 1 to 12, **characterized in that** it comprises applying a function for extracting the binary marking key (W), consisting in:

- selecting the watermarked vectors;
- marking the coordinates of each watermarked movement vector in the reference grid; and
- assigning the binary value of the zone in which the watermarked vector is situated to the bit of the marking key with which the selected movement vector is associated.

**16.** A method according to claim 15 for extracting the watermarking from a video signal (S') watermarked by applying a method according to claim 3, **characterized in that**, for each movement vector (20) of the highest level (16) selected on application of the watermarking method, the following steps are applied:

- extracting the watermarked movement vectors (26) associated with said movement vector,

- calculating an average vector equal to the average of the watermarked movement vectors (26) associated with said movement vector; and

- applying the marking key extraction function to the calculated average vector.

17. A device for extracting the watermarking from a video signal (S'), **characterized in that** it includes means for implementing a method according to claim 15 or claim 16.

**Patentansprüche**

1. Verfahren zur Anbringung eines Wasserzeichens in einem Videosignal (S) durch Anwendung einer Wasserzeichen-Funktion auf durch Bewegungsschätzung zwischen Bildern des Videosignals berechnete Bewegungsvektoren mit den folgenden Schritten:

- Anwendung (22) der Wasserzeichen-Funktion auf mindestens einen Teil (20) der berechneten Bewegungsvektoren;
- Erzeugung (30) des mit einem Wasserzeichen versehenen Videosignals durch Bewegungskompensation mit Hilfe der mit einem Wasserzeichen versehenen Bewegungsvektoren (28),

wobei die Anwendung der Wasserzeichen-Funktion mit Hilfe eines binären Markierungsschlüssels (W) realisiert wird, von dem jeder der Bits mindestens einem ausgewählten Bewegungsvektor zugewiesen ist, **dadurch gekennzeichnet, dass** für die Anwendung der Wasserzeichen-Funktion

- die Koordinaten des ausgewählten Bewegungsvektors ($\vec{V}$) in einem in mehrere vorgegebene Teile unterteilten Referenzraum festgelegt werden;
- in jedem Teil zwei komplementäre Bereiche Z0 und Z1 bestimmt werden, wobei ein beliebiger dieser zwei Bereiche innerhalb des anderen angeordnet ist;
- jedem der zwei Bereiche ein binärer Wert zugeordnet wird;
- die Koordinaten des ausgewählten Bewegungsvektors eventuell geändert werden, so dass er sich in dem Bereich des Teils, zu dem er gehört, befindet, dessen binärer Wert dem Bit des Markierungsschlüssels entspricht, welchem der ausgewählte Bewegungsvektor zugewiesen ist.

2. Verfahren zur Anbringung eines Wasserzeichens in einem Videosignal (S) nach Anspruch 1, **dadurch gekennzeichnet, dass** die Referenzpartition ein Referenzraster mit Blöcken (40) mit vorgegebenen Abmessungen ist, wobei jeder Block einen ersten und einen zweiten Bereich ($Z_0$, $Z_1$) aufweist.

3. Verfahren zur Anbringung eines Wasserzeichens in einem Videosignal (S) nach Anspruch 1 oder 2, **dadurch gekennzeichnet, dass** es die folgenden Schritte aufweist:

- hierarchische Berechnung (14) mehrerer sukzessiver Ebenen (12, 16) von Bewegungsvektoren, wobei die Bewegungsvektoren einer gegebenen Ebene jeweils mehreren Bewegungsvektoren der nächstunteren Ebene zugewiesen sind;
- Auswahl (18) mindestens eines Teils der zu der höchsten Ebene (16) gehörenden Bewegungsvektoren;
- Anwendung (22) der Wasserzeichen-Funktion auf jeden ausgewählten Bewegungsvektor, welche zur Berechnung eines Parameters zur Änderung dieses Bewegungsvektors führt;
- Anwendung des Parameters zur Änderung des ausgewählten Bewegungsvektors auf die Bewegungsvektoren einer niedrigeren Ebene, welche diesem Bewegungsvektor zugewiesen sind.

4. Verfahren zur Anbringung eines Wasserzeichens in einem Videosignal (S) nach Anspruch 3, **dadurch gekennzeichnet, dass** die Bewegungsvektoren einer gegebenen-Ebene (16) jeweils dem Mittelwert der Bewegungsvektoren der nächstunteren Ebene (12), welchen sie zugewiesen sind, gleich sind.

5. Verfahren zur Anbringung eines Wasserzeichens in einem Videosignal (S) nach Anspruch 3 oder 4, **dadurch gekennzeichnet, dass** es einen Schritt der hierarchischen Berechnung (14) zweier sukzessiver Ebenen (12, 16) von Bewegungsvektoren aufweist, wobei jeder Bewegungsvektor der höheren Ebene (16) vier Bewegungsvektoren der unteren Ebene (12) zugewiesen ist

6. Verfahren zur Anbringung eines Wasserzeichens in einem Videosignal nach einem der Ansprüche 1 bis 5, **dadurch gekennzeichnet, dass** der erste und der zweite Bereich ($Z_0$, $Z_1$) eine weitestgehend gleiche Fläche aufweisen.

7. Verfahren zur Anbringung eines Wasserzeichens in einem Videosignal (S) nach einem der Ansprüche 1 bis 6, **dadurch gekennzeichnet, dass** in jedem Block (40) des Referenzrasters ein innerhalb des Blocks zentrierter Unterblock (42) definiert wird, wobei der erste Bereich ($Z_1$) durch das Innere des Unterblocks bestimmt ist und der zweite Bereich

(Z$_2$) der komplementäre Bereich zu dem ersten Bereich in dem Block ist

8.  Verfahren zur Anbringung eines Wasserzeichens in einem Videosignal (S) nach Anspruch 7, **dadurch gekennzeichnet, dass** die Blöcke (40) und Unterblöcke (42) des Referenzrasters rechteckig sind.

9.  Verfahren zur Anbringung eines Wasserzeichens in einem Videosignal (S) nach einem der Ansprüche 1 bis 8, **dadurch gekennzeichnet, dass** die eventuelle Änderung an dem ausgewählten Bewegungsvektor ($\vec{V}$) eine gewichtete Symmetrie ist.

10. Verfahren zur Anbringung eines Wasserzeichens in einem Videosignal (S) nach Ansprüchen 8 und 9, **dadurch gekennzeichnet, dass** die eventuelle Änderung an dem ausgewählten Bewegungsvektor ($\vec{V}$) entweder eine zentrale, in Bezug auf eine der Spitzen des Unterblocks (42) gewichtete Symmetrie oder eine axiale, in Bezug auf eine der Seiten des Unterblocks (42) gewichtete Symmetrie ist.

11. Verfahren zur Anbringung eines Wasserzeichens in einem Videosignal (S) nach einem der Ansprüche 1 bis 10, **dadurch gekennzeichnet, dass** jeder Bit des binären Markierungsschlüssels (W) mehreren ausgewählten Bewegungsvektoren zugewiesen ist.

12. Verfahren zur Anbringung eines Wasserzeichens in einem Videosignal (S) nach einem der Ansprüche 1 bis 11, **dadurch gekennzeichnet, dass** ein Teil der Bits des binären Markierungsschlüssets (W) Bewegungsvektoren zugewiesen ist, welche durch Bewegungsschätzung zwischen zwei Bildern des Videosignals (S) berechnet werden, und dass mindestens ein anderer Teil der Bits des binären Markierungsschlüssels Bewegungsvektoren zugewiesen ist, welche durch Bewegungsschätzung zwischen mindestens zwei weiteren Bildern des Videosignals berechnet werden.

13. Vorrichtung zur Anbringung eines Wasserzeichens in einem Videosignal (S), **dadurch gekennzeichnet, dass** sie Mittel zur Durchführung eines Verfahrens nach einem der Ansprüche 1 bis 12 aufweist.

14. Von einem Computer lesbarer Datenträger, **dadurch gekennzeichnet, dass** er ein Videosignal (S') speichert, welches mit Hilfe eines Verfahrens nach einem der Ansprüche 1 bis 12 mit einem Wasserzeichen versehen wird.

15. Verfahren zur Extraktion des Wasserzeichens aus einem Videosignal (S'), welches durch Anwendung eines Verfahrens nach einem der Ansprüche 1 bis 12 mit einem Wasserzeichen versehen wurde, **dadurch gekennzeichnet, dass** es die Anwendung einer Funktion zur Extraktion des binären Markierungsschlüssels (W) enthält, bestehend darin:

    -   die mit einem Wasserzeichen versehenen Vektoren auszuwählen;
    -   die Koordinaten jedes mit einem Wasserzeichen versehenen Bewegungsvektors in der Referenzpartition festzulegen;
    -   dem Bit des Markierungsschlüssels, welchem der ausgewählte Bewegungsvektor zugewiesen ist, den binären Wert des Bereichs zuzuordnen, in dem sich der mit einem Wasserzeichen versehene Vektor befindet.

16. Verfahren zur Extraktion des Wasserzeichens aus einem Videosignal (S') nach Anspruch 15, wobei das Videosignal (S') durch Anwendung eines Verfahrens nach Anspruch 3 mit einem Wasserzeichen versehen wird, **dadurch gekennzeichnet, dass** für jeden Bewegungsvektor (20) der höchsten, bei der Anwendung des Verfahrens zur Anbringung eines Wasserzeichens ausgewählten Ebene (16)

    -   die diesem Bewegungsvektor zugewiesenen, mit einem Wasserzeichen versehenen Bewegungsvektoren (26) extrahiert werden;
    -   ein mittlerer Vektor berechnet wird, welcher dem Mittelwert der mit einem Wasserzeichen versehenen, diesem Bewegungsvektor zugewiesenen Bewegungsvektoren (26) gleich ist und
    -   die Funktion zur Extraktion des Markierungsschlüssels auf den mittleren berechneten Vektor angewendet wird.

17. Vorrichtung zur Extraktion des Wasserzeichens aus einem Videosignal (S'), **dadurch gekennzeichnet, dass** sie Mittel zur Durchführung eines Verfahrens nach Anspruch 15 oder 16 aufweist.

Fig. 1

## Fig. 2

**Fig. 3**

**Fig. 5**

**Fig. 4**

**Fig. 6**